(19) Europäisches Patentamt
European Patent Office
Office européen des brevets

(11) **EP 1 325 850 B1**

(12) **EUROPEAN PATENT SPECIFICATION**

(45) Date of publication and mention
of the grant of the patent:
**25.07.2007 Bulletin 2007/30**

(51) Int Cl.:
***B60R 25/02*** (2006.01)          ***E05B 9/08*** (2006.01)

(21) Application number: **02257579.9**

(22) Date of filing: **31.10.2002**

(54) **Steering lock mechanism of automotive steering device**

Vorrichtung zur Lenkungsverriegelung einer Kraftfahrzeuglenkung

Dispositif de verrouillage de la colonne de direction d'un véhicule automobile

(84) Designated Contracting States:
**DE FR GB**

(30) Priority: **27.12.2001 JP 2001396758**

(43) Date of publication of application:
**09.07.2003 Bulletin 2003/28**

(73) Proprietors:
• **NISSAN MOTOR COMPANY LIMITED**
**Yokohama-shi Kanagawa 221-0023 (JP)**
• **RENAULT s.a.s.**
**92513 Boulogne Bilancourt Cedex (FR)**

(72) Inventors:
• **Tada, Masatoshi**
**Chofu-shi,**
**Tokyo 182-0023 (JP)**

• **Take, Tadakatsu**
**Ebina-shi,**
**Kanagawa 243-0401 (JP)**

(74) Representative: **Godwin, Edgar James**
**Marks & Clerk**
**90 Long Acre**
**London WC2E 9RA (GB)**

(56) References cited:
**DE-A- 2 261 372**          **FR-A- 986 431**
**FR-A- 2 783 218**          **GB-A- 980 534**
**US-A- 4 425 770**          **US-A- 4 948 938**

## Description

### BACKGROUND OF INVENTION

#### 1. Field of Invention

The present invention relates in general to automotive steering devices and more particularly to steering lock mechanisms of such automotive steering devices. More specifically, the present invention is concerned with the steering lock mechanisms of a type that is easily mounted to a right position of the automotive steering device.

#### 2. Description of Related Art

Usually, a steering lock mechanism of an automotive steering device comprises a key lock rod that is actuated in response to a given turning of an ignition key cylinder and a lock notch that is provided in a steering wheel shaft for receiving a head portion of the key lock rod upon actuation of the same. The steering wheel shaft is installed in a steering wheel column. The key lock rod is axially movably installed in a housing structure mounted on the steering wheel column that has an aperture through which the key lock rod passes upon actuation of the same. That is, when the ignition key cylinder is turned to OFF position, the head portion of the key lock rod is projected, through the aperture of the steering wheel column, into the lock notch of the steering wheel shaft thereby to lock the steering wheel shaft.

In order to achieve an assured locking of the steering wheel shaft by the key lock rod, exact positioning of the key lock rod relative to the lock notch is needed. Usually, due to integral and concentric coupling between the steering wheel shaft and steering wheel column, the relative positioning between the lock notch in the shaft and the aperture in the column has been precisely made. Thus, if the housing structure of the key lock rod is exactly positioned relative to the aperture of the steering wheel column, adequate positioning of the key lock rod relative to the lock notch must be automatically obtained.

US-A-4 425 770, on which the preamble of claim 1 is based discloses a steering lock mechanism in which a projection of rectangular cross-section is received in a rectangular opening.

### SUMMARY OF INVENTION

It is an object of the present invention to provide a steering lock mechanism of an automotive steering device, in which a housing structure of a key lock rod can be exactly positioned relative to an aperture of a steering wheel column.

The present invention provides a steering lock mechanism as set forth in claim 1.

### BRIEF DESCRIPTION OF DRAWINGS

Fig. 1 is a perspective view of a part of an automotive steering device to which a steering lock mechanism of a first embodiment of the present invention is practically applied;
Fig. 2 is a view similar to Fig. 1, but some parts being moved for clarification of an inner structure of the steering lock mechanism;
Fig. 3 is a perspective view of a steering lock unit of the steering lock mechanism of the first embodiment, that is incorporated with an ignition key cylinder;
Fig. 4 is an enlarged, sectional and partial view of a coupling/positioning structure employed in the steering lock mechanism of the first embodiment;
Figs. 5A and 5B are sectional views of the coupling/positioning structure, in which Fig. 5A shows a condition wherein the steering lock mechanism is about to be assembled, and Fig. 5B shows a condition wherein the steering lock mechanism is fully assembled;
Fig. 6 is a perspective view of an inner surface of a holding portion of a steering lock unit of a steering lock mechanism of a second embodiment of the present invention;
Fig. 7 is a view similar to Fig. 5A, but showing a case of the second embodiment; and
Figs. 8A and 8B are views similar to Figs. 5A and 5B, but showing a coupling structure commonly employed for coupling a steering lock mechanism with a steering wheel column.

### DETAILED DESCRIPTION OF EMBODIMENTS

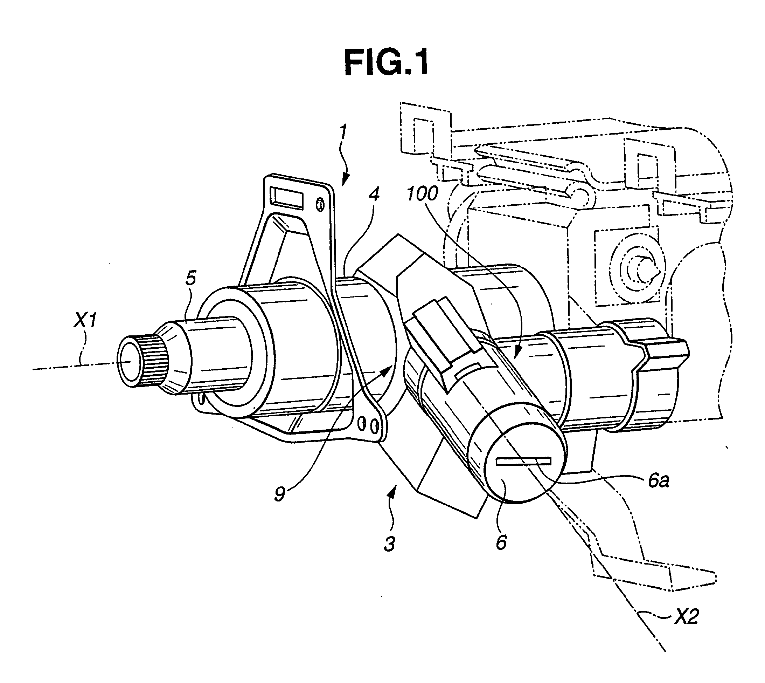

Referring to Figs. 1 to 5B, there is shown a steering lock mechanism 100 of an automotive steering device, which is a first embodiment of the present invention.

In Fig. 1, there is shown an upper part of an automotive steering device 1 to which a steering lock mechanism 100 of a first embodiment of the present invention is practically applied.

Denoted by numeral 5 is a steering wheel shaft that has a top (left) end to which a steering wheel (not shown) is connected. Although not shown in the drawings, the steering wheel shaft 5 has a lower (or rightmost) end connected to steered front road wheels through known gear, link and rod mechanisms. Thus, when the steering wheel is turned right or left, the front road wheels are swiveled right or left.

Steering wheel shaft 5 is concentrically received in a steering wheel column 4 that is fixed to a fixed member of an associated motor vehicle.

Steering lock mechanism 100 has a steering lock unit 3 that is incorporated with an ignition key cylinder 6 that has a key slot 6a. As will become apparent as the description proceeds, when, with the associated motor vehicle being at a standstill, ignition key cylinder 6 is turned to OFF position with a key (not shown) kept in key slot 6a, the engine becomes stops and at the same time, steering lock unit 3 becomes operated to lock steering wheel shaft 5.

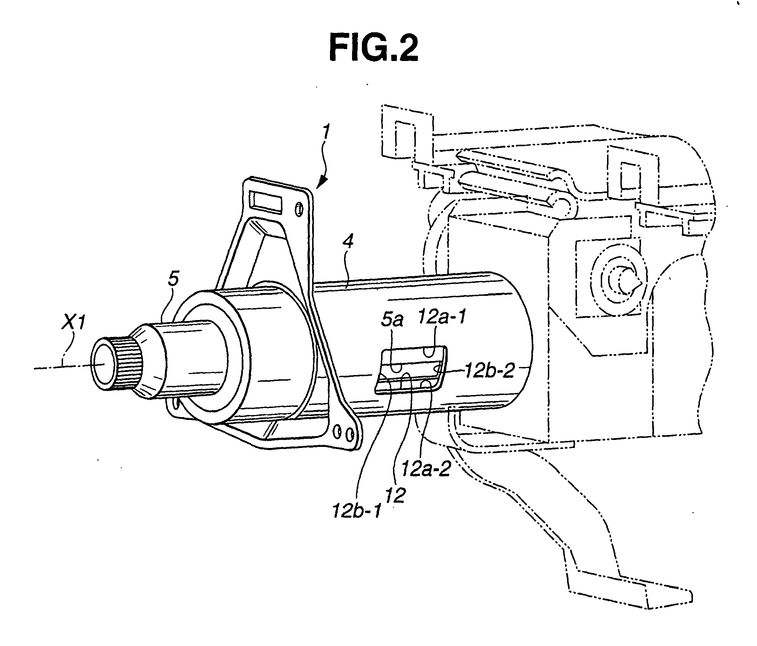

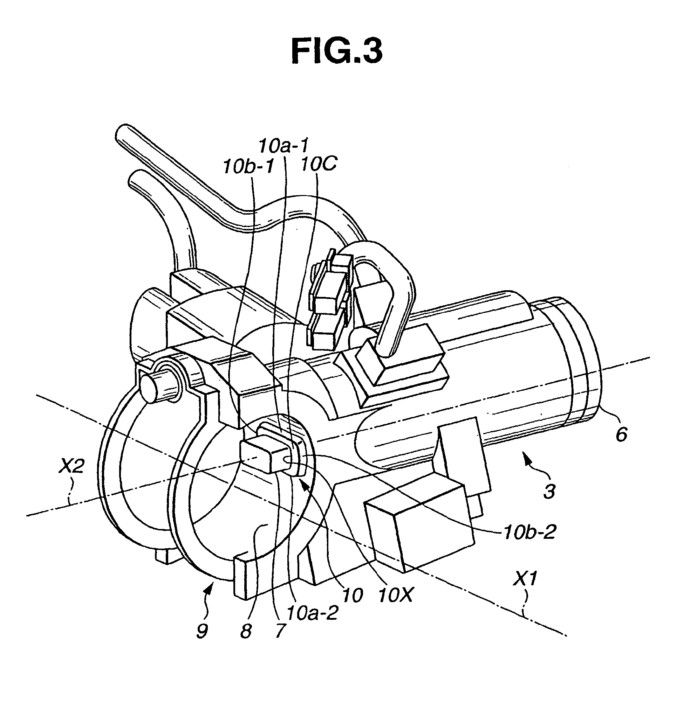

In Fig. 2, there is shown automotive steering device 1 with steering lock unit 3 removed. As is seen from this drawing, steering wheel column 4 is formed with a rectangular aperture 12 through which a given part of steering wheel shaft 5 is exposed to the outside. The given part of steering wheel shaft 5 is formed with a lock notch 5a with which a head portion of key lock rod 7 (see Fig. 3) of the steering lock unit 3 is engageable.

Referring to Fig. 3, there is shown steering lock unit 3. As shown, steering lock unit 3 comprises key lock rod 7 that is incorporated with the ignition key cylinder 6. Steering lock unit 3 further comprises an annular holder bracket 9 that has a concave inner surface 8 through which the head portion of key lock rod 7 is exposed to the interior of annular holder bracket 9.

Referring back to Fig. 1, annular holder bracket 9 of steering lock unit 3 grasps a given portion of steering wheel column 4 in such a manner that an axis "X2" of key lock rod 7 is substantially perpendicular to an axis "X1" of steering wheel shaft 5. With this, the head portion of key lock rod 7 can be precisely mated with lock notch 5a of steering wheel shaft 5 through rectangular aperture 12 of steering wheel column 4 (see Fig. 2). That is, when, with the associated motor vehicle being at a standstill with steering wheel shaft 5 kept in a neutral angular position, ignition key cylinder 6 is turned to OFF position with the key, key lock rod 7 is projected into the steering wheel column 4 through the aperture 12 engaging its head portion with lock notch 5a of steering wheel shaft 5. With this, steering wheel shaft 5 is locked.

In order to assure the locked engagement of the head portion of key lock rod 7 with lock notch 5a, an exact relative positioning between key lock rod 7 and rectangular aperture 12 of steering wheel column 4 (more specifically, between key lock rod 7 and lock notch 5a of steering wheel shaft 5) is needed. In this connection, the following measures are employed in the first embodiment.

Referring back to Fig. 3, there is shown a rectangular stage member 10 that is mounted on concave inner surface 8 of annular holder bracket 9. More specifically, rectangular stage member 10 is a metal member welded to concave inner surface 8 and has a rectangular opening 10x in which the head portion of key lock rod 7 is slidably received. Upon assembly, rectangular stage member 10 is intimately and accurately set in the above-mentioned rectangular aperture 5a (see Fig. 2) of steering wheel column 4.

That is, rectangular stage member 10 and rectangular aperture 12 constitute a so-called coupling/positioning structure through which steering lock unit 3 is coupled with steering wheel column 4 providing an assured relative positioning therebetween, for the reasons which will become apparent from the following description.

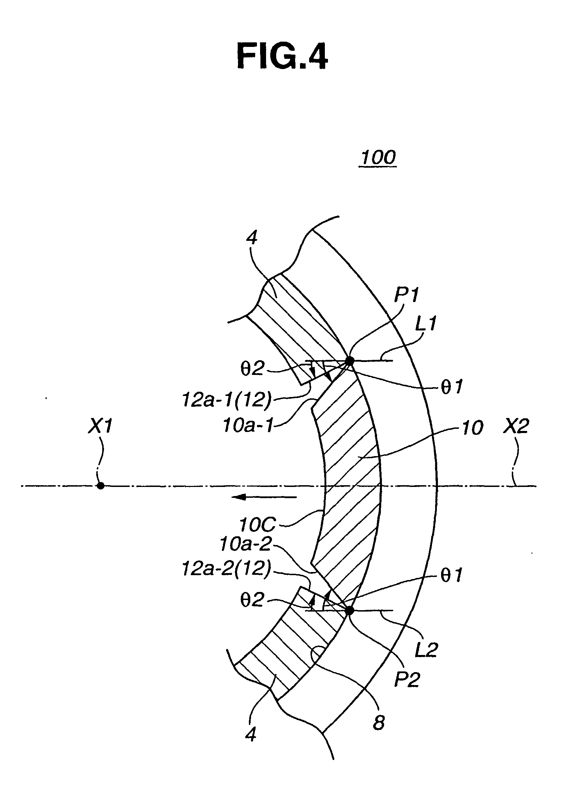

Fig. 4 shows an enlarged vertically sectional view of the coupling/positioning structure in a condition wherein steering lock unit 3 is properly coupled with steering wheel column 4, namely, rectangular stage member 10 is properly received in rectangular aperture 12 of steering wheel column 4.

As is seen from this drawing, upper and lower edges 10a-1 and 10a-2 of rectangular stage member 10 are both sloped.
More specifically, each of upper and lower edges 10a-1 and 10a-2 has a flat major surface that is inclined toward a concave front surface 10c of stage member 10.

As is seen from Fig. 3, side edges 10b-1 and 10b-2 of rectangular stage member 10 have each a flat major surface that is perpendicular to concave front surface 10c.

Referring back to Fig. 4, upper and lower edges of rectangular aperture 12 of steering wheel column 4 have mutually opposed flat surfaces 12a-1 and 12a-2 whose distance gradually increases with increase of distance from an axis "X1" of steering wheel shaft 5.

Preferably, side edges 12b-1 and 12b-2 (see Fig. 2) of rectangular aperture 12 have each a flat major surface that is perpendicular to the axis "X1" of steering wheel shaft 5.

It is to be noted that the length between side edges 12b-1 and 12b-2 (see Fig. 2) of rectangular aperture 12 is substantially the same as that between side edges 10b-1 and 10b-2 (see Fig. 3) of rectangular stage member 10, and as is seen from Fig. 4, the maximum length between upper and lower edges 12a-1 and 12a-2 of rectangular aperture 12 is generally the same as that between upper and lower edges 10a-1 and 10a-2 of rectangular stage member 10.

The dimensional/positional relationship between rectangular aperture 12 and rectangular stage member 10 will be much clarified from the following description with the aid of Fig. 4.

In Fig. 4, denoted by reference P1 or P2 is an imaginary line that extends along the upper or lower ridge of upper or lower edge 10a-1 or 10a-2 of rectangular stage member 10, and denoted by reference L1 or L2 is an imaginary plane that includes the imaginary line P1 or P2 and is in parallel with an axis "X2" of key lock rod 7.

That is, as is seen from Fig. 4, when rectangular stage member 10 is properly mated with rectangular aperture 12, the following inequality is established:

$$\theta 1 > \theta 2 \quad \ldots\ldots\ldots\ldots \quad (1)$$

wherein:

θ1 :    angle defined by upper or lower edge 10a-1 or 10a-2 relative to imaginary plane L1 of L2,

θ2 : angle defined by upper or lower edge 12a-1 or 12a-2 relative to imaginary plane L1 or L2.

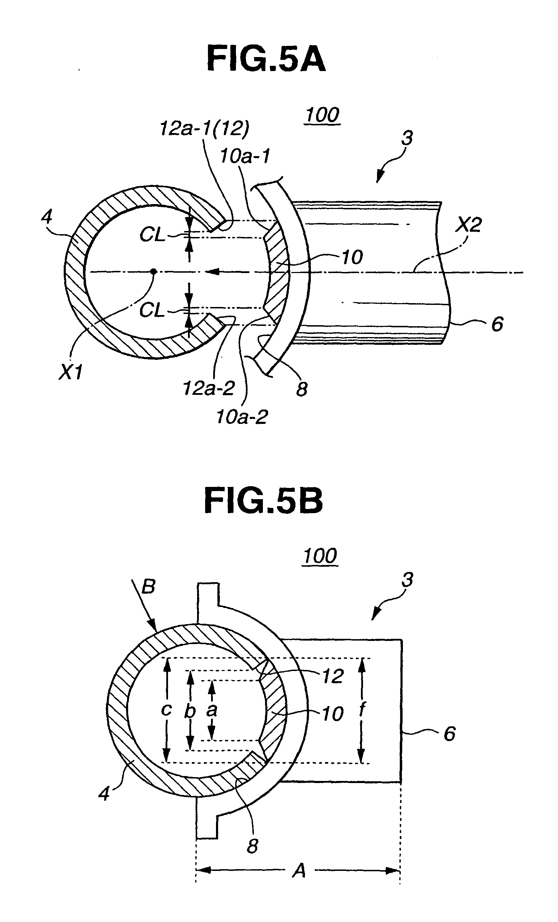

Thus, when, as is seen from Fig. 5A, steering lock unit 3 is about to be fixed to steering wheel column 4, there is inevitably produced a small but certain clearance "CL" between upper or lower edge 10a-1 or 10a-2 of rectangular stage member 10 and upper or lower edges 12a-1 or 12a-2 of rectangular aperture 12. Thus, even if rectangular stage member 10 of steering lock unit 3 fails to align with rectangular aperture 12 of steering wheel column 4 in their initial engaging condition, pressing or moving of steering lock unit 3 toward rectangular aperture 12 brings about a sliding movement of the upper or lower ridge of upper or upper edges 12a-1 or 12a-2 of rectangular aperture 12 of steering wheel column 12 on and along upper or lower edge 10a-1 or 10a-2 of rectangular stage member 10. Thus, finally, as is seen from Fig. 5B, rectangular stage member 10 of steering lock unit 3 is properly or precisely mated with rectangular aperture 12 having the upper and lower ridges thereof engaged with the upper and lower ridges of upper and lower edges 12a-1 and 12a-2 of rectangular aperture 12.

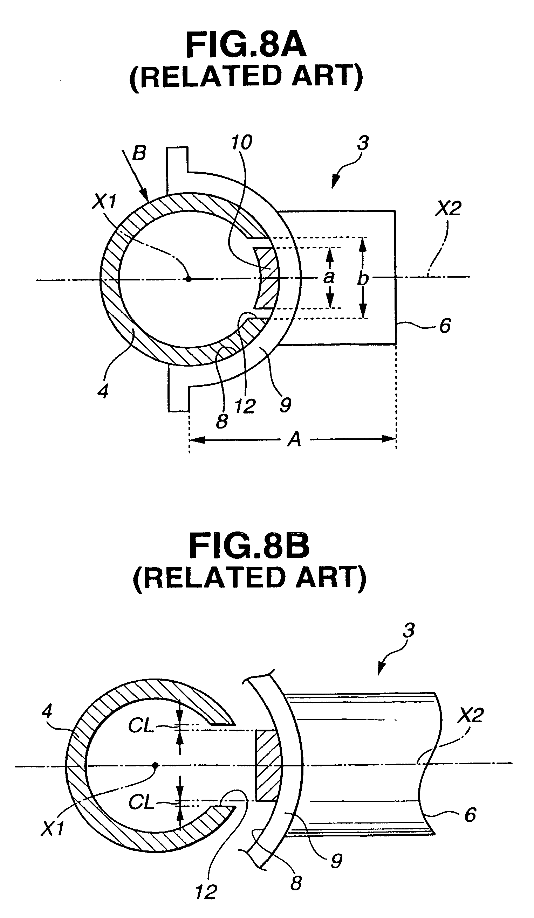

In order to examine advantages of the first embodiment 100 of the present invention, a commonly employed coupling structure for steering lock unit 3 as shown in Figs. 8A and 8B was prepared. As shown, in the common coupling structure, upper and lower edges of rectangular stage member 10 of steering lock unit 3 and upper and lower edges of rectangular aperture 12 of steering wheel column 4 were all flat and in parallel with the axis "X2" of key lock rod 7.

The compare examination was carried out under the following dimensional condition.

That is, in both of them, "a" was 15.8 ± 0.2mm, "b" was 16.1 ± 0.1mm, "c" was 16.0 ± 0.2mm, "f" was 16.1 ± 0.1mm, "A" was 200mm and "B" was R50mm. That is, "a" was the length between the lower ridge of upper edge 10a-1 of rectangular stage member 10 and the upper ridge of lower edge 10a-2 of the stage member 10 in case of the first embodiment 100 of Fig. 5B, but the length between upper and lower edges of rectangular stage member 10 in case of the common coupling structure of Fig. 8A. "b" was the length between the upper ridge of upper edge 10a-1 of rectangular stage member 10 and the lower ridge of the lower edge 10a-2 of the stage member 10 in case of the first embodiment 100 of Fig. 8A, but the length between the upper and lower edges of rectangular aperture 12 in case of the common coupling structure of Fig. 8A. "c" was the length between the lower ridge of upper edge 12a-1 of rectangular aperture 12 and the upper ridge of lower edge 12a-2 of the aperture 12 in case of the first embodiment 100, and "f" was the length between the upper ridge of upper edge 12a-1 of rectangular aperture 12 and the lower ridge of lower edge 12a-2 of the aperture 12 in case of the first embodiment 100. "A" was the length between a front end of the concave inner surface 8 of annular holder bracket 9 and a rear end of ignition key cylinder 6 in both cases. And, "B" was the radius of steering wheel column 4 in both cases.

When finally assembled as shown in Figs. 8A and 5B, the common coupling structure of Fig. 8A showed a displacement of ± 3.0mm in alignment between the key lock rod 7 and lock notch 5a of steering wheel shaft 5, while, the coupling/positioning structure of first embodiment 100 of Fig. 5B showed only a displacement of ± 2.0mm that was smaller than the displacement (± 3.0mm) of the common coupling structure.

In the following, advantages of the steering lock mechanism 100 of the first embodiment will be itemized.

First, as is seen from Fig. 5A, due to the sliding engagement of the upper ridge of upper edge 12a-1 of rectangular aperture 12 of steering wheel column 4 with the sloped upper edge 10a-1 of rectangular stage member 10, or of the lower ridge of lower edge 12a-2 of the aperture 12 with the sloped lower edge 10a-2 of the stage member 10, pushing steering lock unit 3 toward steering wheel column 4 automatically brings about the exact positioning of rectangular stage member 10 relative to rectangular aperture 12, namely, the exact positioning of key lock rod 7 relative to lock notch 5a of steering wheel shaft 5, in such a manner as has been described hereinabove. This facilitates the work for mounting the steering lock mechanism to the steering device 1.

Second, as is seen from Fig. 5B, when steering lock unit 3 is finally and properly assembled on steering wheel column 4, the upper ridge of upper edge 10a-1 of rectangular stage member 10 abuts against the upper ridge of upper edge 12a-1 of rectangular aperture 12 of the column 4 and the lower ridge of lower edge 10a-2 of the stage member 10 abuts against the lower ridge of lower edge 12a-2 of the aperture 12. Thus, even when, due to a force applied to the steering wheel (not shown) under a locked condition of steering wheel shaft 5, the rectangular stage member 10 is applied with a marked force through key lock rod 7 in a circumferential direction, the force is steadily received by the upper or lower edge 12a-1 or 12a-2 of rectangular aperture 12 of steering wheel column 4. This means an assured and reliable lock condition of steering wheel shaft 5.

Third, rectangular shape of the aperture 12 brings about an easy work for making the aperture 12 in steering wheel column 4 which is cylindrical in shape.

Fourth, because of the sliding engagement between the ridge of rectangular aperture 12 of the steering wheel column 4 and the sloped edge 10a-1 or 10a-2 of rectangular stage member 10, the exact positioning of rectangular stage member 10 relative to rectangular aperture 12 is readily achieved even if these parts 12 and 10 fail to have exact dimensions.

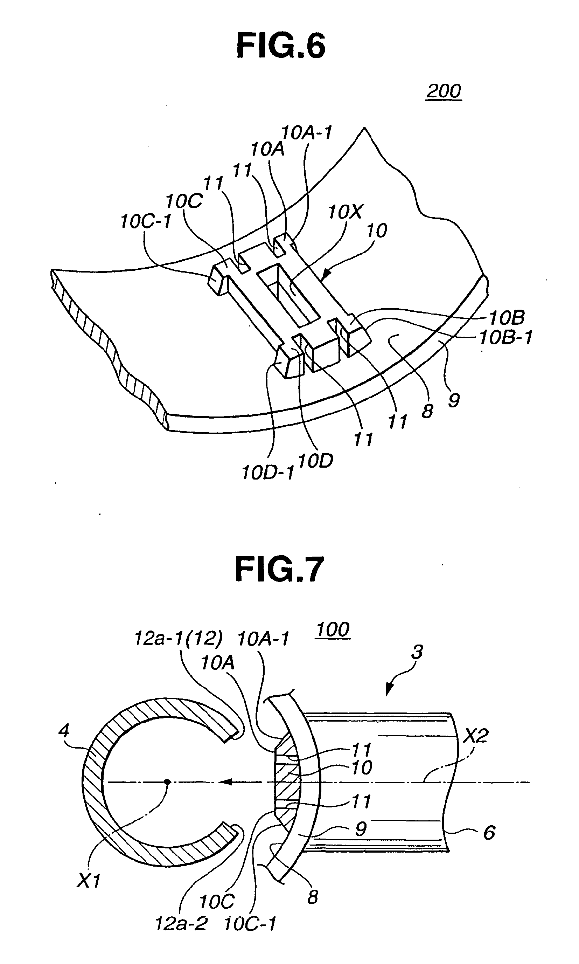

Referring to Figs. 6 and 7, there is shown a coupling/positioning structure employed in a steering lock mechanism 200 of a second embodiment of the present invention.

Fig. 6 shows a rectangular stage member 10 employed in the coupling/positioning structure in this second embodiment 200.

That is, as is seen from the drawing, rectangular stage member 10 is mounted on concave inner surface 8 of annular holder bracket 9, like in case of the above-mentioned first embodiment 100 (see Fig. 3). The member 10 has a rectangular opening 10x through which the head of key lock rod 7 is slidably received. Like in the first embodiment 100, upon assembly, rectangular stage member 10 is intimately and accurately set in a rectangular aperture 12 formed in steering wheel column 4.

As is seen from Figs. 6 and 7, rectangular stage member 10 is formed at its four corners with respective stand portions 10A, 10B, 10C and 10D. Each stand portion 10A, 10B, 10C or 10D has a sloped surface 10A-1, 10B-1, 10C-1 or 10D-1 that is shaped to have an angle of "θ1" (see Fig. 4). Behind each stand portion 10A, 10B, 10C or 10D, there is formed a cut 11 in the member 10. With cut 11, each stand portion 10A, 10B, 10C or 10D can have a certain resiliency.

As is seen from Fig. 7, upper and lower edges of rectangular aperture 12 of steering wheel column 4 have mutually opposed flat surfaces 12a-1 and 12a-2 whose distance gradually increases with increase of distance from the axis "X1" of steering wheel shaft 5.

Like the first embodiment 100, in the coupling/positioning structure employed in the second embodiment 200, the above-described inequality "θ1 > θ2" (see Fig. 4) is established between sloped surface of each stand portion 10A, 10B, 10C or 10D of rectangular stage member 10 and upper or lower edge 12a-1 or 12a-2 of rectangular aperture 12.

Accordingly, when, as is seen from Fig. 7, rectangular stage member 10 of steering lock unit 3 is pressed into rectangular aperture 12, the exact positioning of key lock rod 7 relative to lock notch 5a of steering wheel shaft 5 is automatically achieved for the reason as has been described hereinabove.

Besides the above-mentioned advantages of the first embodiment 100, the following advantage is further given in the steering lock mechanism 200 of the second embodiment.

That is, due to the resiliency of stand portions 10A, 10B, 10C and 10D of rectangular stage member 10, the sliding engagement of the stand portions 10A, 10B, 10C and 10D with upper and lower edges 12a-1 and 12a-2 of rectangular aperture 12 is much smoothly made and thus, the exact positioning of rectangular stage member 10 relative to rectangular aperture 12 is much assuredly achieved.

In place of the rectangular shape, the stage member 10 and aperture 12 may have another shape, having mutually opposed upper and lower edges.

Although the invention has been described above with reference to the embodiments of the invention, the invention is not limited to such embodiments as described above. Various modifications and variations of such embodiments may be carried out by those skilled in the art, in light of the above descriptions, that lie within the scope of the appended claims.

## Claims

1. A steering lock mechanism (100, 200) of an automotive steering device (1), the steering device having a steering wheel shaft (5) having an axis (X1) and being housed in a steering wheel column (4), the steering lock mechanism comprising:

   a first structure (3) adapted to be mounted on the steering wheel column (4) and having a key lock rod (7) that is projectable, along an axis (X2) substantially perpendicular to the axis (X1) of the steering wheel shaft (5), through an aperture (12) in the steering wheel column (4), into a lock notch (5a) formed in the steering wheel shaft (5) to lock the steering wheel shaft (5);
   a projection (10) provided by the first structure (3) and being sized and shaped to be received in the aperture (12) in the steering wheel column (4), the projection (10) having an opening (10X) in which the head portion of the key lock rod (7) is slidably received, and having mutually opposed upper and lower edges (10a-1, 10a-2), (10A-1, 10B-1, 10C-1, 10D-1) with respect to a plane defined by the axis of the steering wheel shaft (5) and key lock rod (7);
   the aperture (12) in the steering wheel column (4) having mutually opposed edges (12a-1, 12a-2) against which the mutually opposed edges of the projection (10) abut when the projection is pressed into the aperture, thereby achieving a positioning of the first structure relative to the steering wheel column (4);

   **characterised in that** the mutually opposed upper and lower edges (10a-1), 10a-2, (10A-1, 10B-1, 10C-1, 10D-1) of the projection (10) are sloped with respect to the axis (X2) along which the key lock rod (7) moves such that, when the projection (10) is fully received in the aperture (12), leading ridges of the opposed edges (12a-1, 12a-2) of the aperture (12) abut against root portions of the corresponding opposed upper and lower sloped edges (10a-1, 10a-2), (10A-1, 10B-1, 10C-1, 10D-1) of the projection (10).

2. A steering lock mechanism as claimed in claim 1, in which the projection (10) has a rectangular cross section and the aperture (12) is rectangular in shape.

3. A steering lock mechanism as claimed in claim 2, in which the projection (10) is a rectangular stage member that is secured to the first structure (3).

**4.** A steering lock mechanism as claimed in claim 3, in which the rectangular stage member (10) is provided at four corners thereof with respective stand portions (10A, 10B, 10C, 10D), the stand portions having respective sloped surfaces (10A-1, 10B-1, 10C-1,10D-1) that are slidably engageable with the mutually opposed edges (12a-1, 12a-2) of the rectangular aperture (12).

**5.** A steering lock mechanism as claimed in claim 4, in which the rectangular stage member (10) is formed with cuts (11) for providing the stand portions (10A, 10B, 10C, 10D) with resiliency.

**6.** A steering lock mechanism as claimed in any of claims 1 to 4, in which the projection (10) is formed with cuts (11) to provide the mutually opposed sloped edges (10a-1, 10a-2), (10A-1, 10B-1, 10C-1, 10D-1) of the projection (10) with resiliency.

**Patentansprüche**

**1.** Vorrichtung zur Lenkungsverriegelung (100, 200) einer Kraftfahrzeuglenkvornchtung (1), wobei die Lenkvorrichtung eine Lenkradwelle (5) mit einer Achse (X1) aufweist und in einer Lenkradsäule (4) untergebracht ist, wobei die Vorrichtung zur Lenkungsverriegelung aufweist:

eine erste Struktur (3), die so ausgeführt ist, dass sie an der Lenkradsäule (4) montiert wird, und die einen Schlüsselverriegelungsstab (7) aufweist, der längs einer Achse (X2) im Wesentlichen senkrecht zur Achse (X1) der Lenkradwelle (5) durch eine Öffnung (12) in der Lenkradsäule (4) in eine Verriegelungskerbe (5a) vorspringen kann, die in der Lenkradwelle (5) gebildet wird, um die Lenkradwelle (5) zu verriegeln;
einen Vorsprung (10), der durch die erste Struktur (3) bereitgestellt wird, und der bemessen und geformt ist, um in der Öffnung (12) in der Lenkradsäule (4) aufgenommen zu werden, wobei der Vorsprung (10) eine Öffnung (10X) aufweist, in der der Kopfabschnitt des Schlüsselverriegelungsstabes (7) verschiebbar aufgenommen wird, und der einander gegenüberliegende obere und untere Ränder (10a-1, 10a-2), (10A-1, 10B-1, 10C-1, 10D-1) mit Bezugnahme auf eine Ebene aufweist, die durch die Achse der Lenkradwelle (5) und den Schlüsselverriegelungsstab (7) definiert wird;
die Öffnung (12) in der Lenkradsäule (4), die einander gegenüberliegende Ränder (12a-1, 12a-2) aufweist, an die die einander gegenüberliegenden Ränder des Vorsprunges (10) anstoßen, wenn der Vorsprung in die Öffnung gepresst wird, wodurch ein Positionieren der ersten Struktur relativ zur Lenkradsäule (4) zustande gebracht wird;

**dadurch gekennzeichnet, dass** die einander gegenüberliegenden oberen und unteren Ränder (10a-1, 10a-2), (10A-1, 10B-1, 10C-1, 10D-1) des Vorsprunges (10) mit Bezugnahme auf die Längsachse (X2), längs der sich der Schlüsselverriegelungsstab (7) bewegt, so geneigt sind, dass, wenn der Vorsprung (10) vollständig in der Öffnung (12) aufgenommen wird, die Vorderkanten der gegenüberliegenden Ränder (12a-1, 12a-2) der Öffnung (12) gegen die Grundabschnitte der entsprechenden gegenüberliegenden oberen und unteren geneigten Ränder (10a-1, 10a-2), (10A-1, 10B-1, 10C-1, 10D-1) des Vorsprunges (10) anstoßen.

**2.** Vorrichtung zur Lenkungsverriegelung nach Anspruch 1, bei der der Vorsprung (10) einen rechtekkigen Querschnitt aufweist und die Öffnung (12) eine rechteckige Form zeigt.

**3.** Vorrichtung zur Lenkungsverriegelung nach Anspruch 2, bei der der Vorsprung (10) ein rechteckiges Stufenelement ist, das an der ersten Struktur (3) gesichert wird.

**4.** Vorrichtung zur Lenkungsverriegelung nach Anspruch 3, bei der das rechteckige Stufenelement (10) an vier Ecken davon mit jeweiligen Standordabschnitten (10A, 10B, 10C, 10D) versehen ist, wobei die Standordabschnitte jeweilige geneigte Flächen (10A-l, 10B-1, 10C-1, 10D-1) aufweisen, die mit den einander gegenüberliegenden Rändern (12a-1, 12a-2) der rechteckigen Öffnung (12) verschiebbar in Eingriff gebracht werden können.

**5.** Vorrichtung zur Lenkungsverriegelung nach Anspruch 4, bei der das rechteckige Stufenelement (10) mit Einschnitten (11) dafür ausgebildet ist, dass die Standortabschnitte (10A, 10B, 10C, 10D) mit einer Elastizität versehen werden.

**6.** Vorrichtung zur Lenkungsverriegelung nach einem der Ansprüche 1 bis 4, bei der der Vorsprung (10) mit Einschnitten (11) ausgebildet ist, um die einander gegenüberliegenden geneigten Ränder (10a-1, 10a-2), (10A-1, 10B-1, 10C-1, 10D-1) des Vorsprunges (10) mit einer Elastizität zu versehen.

**Revendications**

**1.** Mécanisme de verrou de direction (100, 200) d'un dispositif de direction d'automobile (1), le dispositif de direction ayant un arbre de direction (5) ayant un axe (X1) et étant logé dans une colonne de direction (4), le mécanisme de verrou de direction comprenant :

une première structure (3) apte pour être montée sur la colonne de direction (4) et ayant un pêne de verrou (7) qui peut être projeté, le long d'un axe (X2) substantiellement perpendiculaire à l'axe (X1) de l'arbre de direction (5), à travers un orifice (12) dans la colonne de direction (4), dans une fente de verrou (5a) formée dans l'arbre de direction (5) pour bloquer l'arbre de direction (5) ;

une saillie (10) fournie par la première structure (3) et étant dimensionnée et formée pour être reçue dans l'orifice (12) dans la colonne de direction (4), la saillie (10) ayant une ouverture (10X) dans laquelle la partie frontale du pêne de verrou (7) vient glisser, et ayant des bords supérieur et inférieur se faisant face (10a-1, 10a-2), (10A-1, 10B-1, 10C-1, 10D-1) par rapport au plan défini par les axes de l'arbre de direction (5) et du pêne de verrou (7) ;

l'orifice (12) dans la colonne de direction (4) ayant des bords se faisant face (12a-1, 12a-2) contre lesquels les bords se faisant face de la saillie (10) viennent butter quand la saillie est enfoncée dans l'orifice, réalisant par ce moyen un positionnement de la première structure par rapport à la colonne de direction (4) ;

**caractérisé en ce que** les bords supérieur et inférieur se faisant face (10a-1, 10a-2), (10A-1, 10B-1, 10C-1, 10D-1) de la saillie (10) sont inclinés par rapport à l'axe (X2) le long duquel le pêne de verrou (7) se déplace de sorte que, quand la saillie (10) est complètement reçue dans l'orifice (12), les arêtes de tête des bords opposés (12a-1, 12a-2) de l'orifice (12) buttent contre les parties de base des bords inclinés supérieur et inférieur se faisant face correspondants (10a-1, 10a-2), (10A-1, 10B-1, 1OC-1, 10D-1) de la saillie (10).

2. Mécanisme de verrou de direction selon la revendication 1, dans lequel la saillie (10) a une section rectangulaire et l'orifice (12) est en forme de rectangle.

3. Mécanisme de verrou de direction selon la revendication 2, dans lequel la saillie (10) est un élément plate-forme rectangulaire qui est fixé à la première structure (3).

4. Mécanisme de verrou de direction selon la revendication 3, dans lequel l'élément étage rectangulaire (10) est munis à ses quatre coins des parties en forme de socle respectives (10A, 10B, 10C, 10D), les parties en forme de socle ayant les surfaces inclinées respectives (10A-1, 10B-1, 10C-1., 10D-1) qui peuvent rentrer en contact avec les bords se faisant face (12a-1, 12a-2) de l'orifice rectangulaire (12) en glissant.

5. Mécanisme de verrou de direction selon la revendication 4, dans lequel l'élément étage rectangulaire (10) est formé avec des entailles (11) pour donner de l'élasticité aux parties en forme de socle (10A, 10B, 10C, 10D).

6. Mécanisme de verrou de direction selon l'une quelconque des revendications 1 à 4, dans lequel la saillie (10) est formée avec des entailles (11) pour donner de l'élasticité aux bords inclinés mutuellement opposés (10a-1, 10a-2), (10A-1, 1OB-1, 1OC-1, 10D-1) de la saillie (10).

# FIG.1

# FIG.2

EP 1 325 850 B1

# FIG.3

# FIG.4

# FIG.5A

# FIG.5B

# FIG.6

# FIG.7

# FIG.8A
## (RELATED ART)

# FIG.8B
## (RELATED ART)

**EP 1 325 850 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4425770 A